Europäisches Patentamt

European Patent Office

Office européen des brevets

(11) Numéro de publication: **0 394 088**
**A1**

# (12) DEMANDE DE BREVET EUROPEEN

(21) Numéro de dépôt: 90400946.1

(22) Date de dépôt: 06.04.90

(51) Int. Cl.⁵: **F16C 33/41, F16C 33/66**

(30) Priorité: 18.04.89 FR 8905095

(43) Date de publication de la demande:
24.10.90 Bulletin 90/43

(84) Etats contractants désignés:
DE ES FR GB IT SE

(71) Demandeur: **S.N.R. ROULEMENTS**
**Boîte Postale 17 1, rue des Usines**
**F-74010 Annecy Cédex(FR)**

(72) Inventeur: **Mermoud, Gérard**
**28, Route des Vieux Rotets**
**F-74330 La Balme de Sillingy(FR)**

(74) Mandataire: **Ernst-Schonberg, Michel et al**
**REGIE NATIONALE DES USINES RENAULT (S.**
**0267) 8 & 10, avenue Emile Zola**
**F-92109 Boulogne Billancourt Cédex(FR)**

(54) **Cage lubrifiantes pour roulement à billes.**

(57) Cage lubrifiante pour roulements à billes constituée par un anneau (1), limité latéralement par deux
faces (2, 3), des cavités (6) réparties circonférentiellement débouchant sur une face (3), des logements
(4) lubrifiés en forme de calotte sphérique ouverts
sur l'autre face (2) et des languettes (7) de rétention
des billes adjacentes à chaque logement (4) et se
prolongeant axialement à partir de ladite face (2).
Chaque logement (4) est raccordé à deux cavités (6)
contenant l'agent lubrifiant et qui sont adjacentes à
une cloison (10) délimitant le fond dudit logement.

FIG 2

## Cage lubrifiante pour roulements à billes

L'invention concerne les cages pour roulements à billes et en particulier les cages lubrifiantes.

On connaît les avantages des cages lubrifiantes dont le montage dans un palier à roulement prolonge la durée de vie de celui-ci en lui conférant les qualités lubrifiantes.

Les publications FR-A-2188725 et 2404146 décrivent des cages confectionnées à partir d'une matière cellulaire microporeuse imprégnée de lubrifiant. Le manque de rigidité de la matière cellulaire nécessite l'emploi de matériaux additionnels de renforcement.

La présente invention concerne une cage conventionnelle qui porte les moyens additionnels destinés à favoriser la lubrification du roulement.

Plus précisément l'invention concerne une cage constituée par un anneau limité latéralement par deux faces, des cavités réparties circonférentiellement débouchant sur une face, des logements lubrifiés en forme de calotte sphérique ouverts sur l'autre face, des languettes de rétention des billes adjacentes à chaque logement et se prolongeant axialement à partir de la dite face de l'anneau.

Selon l'invention chaque logement est raccordé à deux cavités contenant l'agent de lubrification qui débouchent sur l'autre face de l'anneau et qui sont adjacentes à une cloison délimitant le fond dudit logement.

La cage ainsi constituée peut être garnie de graisse dont les variations de viscosité au cours du fonctionnement du roulement permettent l'introduction d'une partie de celle-ci au contact des billes.

La cage ainsi réalisée est considérablement allégée et peut être confectionnée sans grands frais d'outillage.

La fabrication de la cage permet aussi un gain substantiel de la matière.

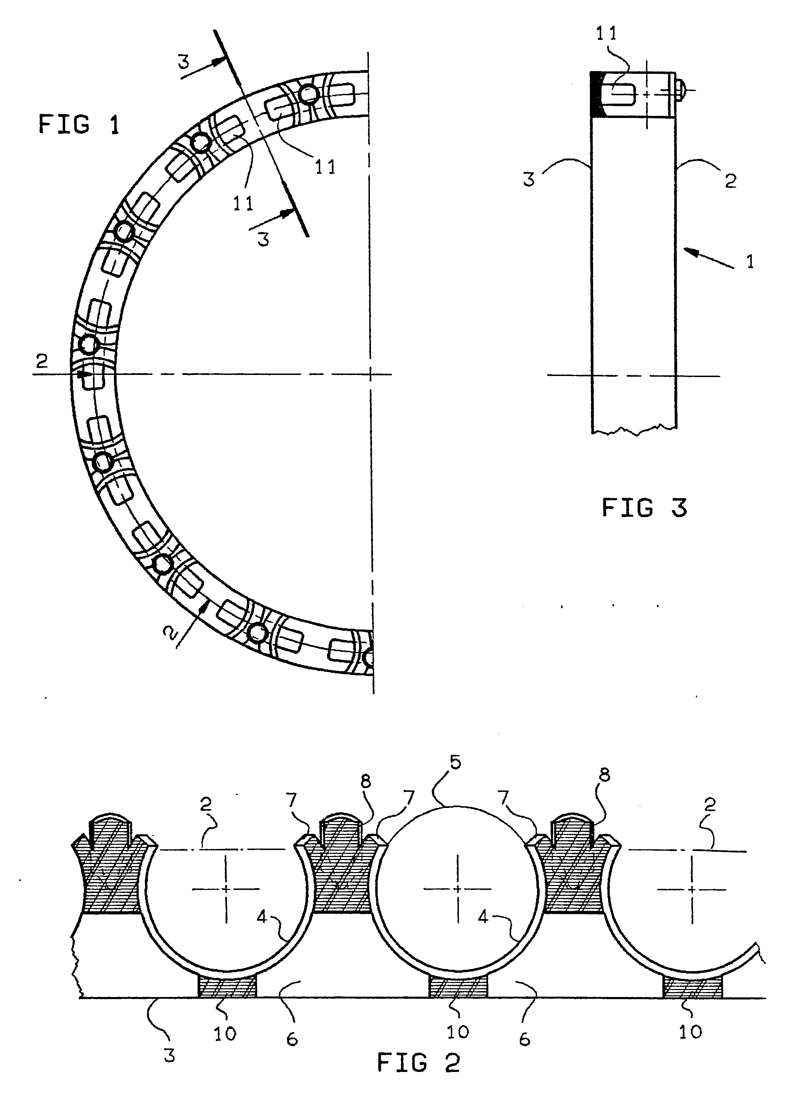

Par ailleurs le fonctionnement du roulement équipé de ce type de cage est amélioré par suite de l'inertie plus réduite de la cage. D'autres caractéristiques et avantages de la cage apparaîtront à la lecture de la description qui suit faite en référence au dessin annexé dans lequel la figure 1 est une vue en plan de la cage. La figure 2 est une vue en coupe de la cage développée suivant la ligne 2 - 2 de la figure 1.

La figure 3 est une coupe radiale de la cage suivant la ligne 3 -3 de la figure 1.

Les figures représentent une cage en matière plastique constituée par un anneau 1 portant 2 faces axiales 2,3. Sur la face 2 débouchent des logements 4 en forme de calotte sphérique de réception des billes 5 uniformément répartis circonférentiellement.

Sur la face 3 débouchent des cavités 6 angulairement décalées par rapport au logement 4.

Deux languettes 7 situées aux bords opposés de chaque logement 4 s'étendent axialement au-dessus du plan de la face 2. Par ailleurs entre les languettes 7 de deux logements consécutifs est compris un doigt 8 facilitant un positionnement automatique de la bille ou de la cage lors de l'insertion des billes dans leurs logements respectifs en vue de leur rétention axiale par les languettes 7. Selon l'invention chaque logement 4 est raccordé à deux cavités telles que 6 contenant une graisse à roulement adjacentes à une cloison 10 délimitant le fond du logement 4.

De ce fait la cage conforme à l'invention peut être obtenue très aisément à partir d'une cage conventionnelle dont les différents logements tels que 4 sont mis en communication avec les cavités 6 au moyen de perçages 11.

Le moule de confection des cages nécessite de ce fait qu'une transformation minime sans incidence sur le coût de fabrication. Selon une autre caractéristique de l'invention, l'ensemble des cavités 6 est en communication au travers des logements 4 et ces derniers communiquent directement entre eux par un film continu de graisse contenu en réserve dans les cavités 6.

## Revendications

1 / Cage lubrifiante pour roulements à billes constituée par un anneau (1), limité latéralement par deux faces (2, 3), des cavités (6) réparties circonférentiellement débouchant sur une face (3), des logements (4) lubrifiés en forme de calotte sphérique ouverts sur l'autre face (2), des languettes (7) de rétention des billes adjacentes à chaque logement (4) et se prolongeant axialement à partir de ladite face (2), caractérisé par le fait que chaque logement (4) est raccordé à deux cavités (6) contenant l'agent lubrifiant et qui sont adjacentes à une cloison (10) délimitant le fond dudit logement.

2 / Cage selon la revendication 1, caractérisée par le fait que le raccordement de chaque logement (4) de bille avec les cavités (6) de l'agent lubrifiant est opéré au travers de la paroi dudit logement (4).

FIG 1

FIG 3

FIG 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | PATENT ABSTRACTS OF JAPAN, vol. 11, no. 54 (M-563)[2501], 19 février 1987; & JP-A-61 215 811 (KOYO SEIKO CO. LTD) 25-09-1986 --- | 1,2 | F 16 C 33/41 F 16 C 33/66 |
| A | GB-A-2 136 889 (S.K.F.) * En entier * --- | 1,2 | |
| A | FR-A-2 374 552 (KUGELFISCHER GEORG SCHÄFER & CO.) * Page 3, lignes 6-21; figures 3,4 * --- | 1,2 | |
| A | US-A-4 169 636 (R.E. HOOPER) --- | | |
| A | US-A-2 380 327 (H.N. PARSONS) ----- | | |

**DOMAINES TECHNIQUES RECHERCHES (Int. Cl.5)**

F 16 C

Le présent rapport a été établi pour toutes les revendications

| Lieu de la recherche | Date d'achèvement de la recherche | Examinateur |
|---|---|---|
| LA HAYE | 01-06-1990 | BEGUIN C.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)